(19) Europäisches Patentamt
European Patent Office
Office européen des brevets

(11) Publication number: 0 170 517 B1

(12) **EUROPEAN PATENT SPECIFICATION**

(45) Date of publication of patent specification: 27.12.89

(51) Int. Cl.⁴: C 07 C 89/00

(21) Application number: 85305411.2

(22) Date of filing: 30.07.85

(54) **Process for the production of 1,2-amino alcohols.**

(30) Priority: 30.07.84 US 635452

(43) Date of publication of application: 05.02.86 Bulletin 86/06

(45) Publication of the grant of the patent: 27.12.89 Bulletin 89/52

(84) Designated Contracting States: CH DE FR GB IT LI SE

(56) References cited:
TETRAHEDRON LETTERS, vol. 24, no. 38, 1983, pages 4075-4078, London, GB; L.R. KREPSKI et al.: "Addition of Grignard reagents to O-trimethylsilylated cyanohydrins: Synthesis of acyloins"

JOURNAL OF THE CHEMICAL SOCIETY, CHEMICAL COMMUNICATIONS, no. 1, 1973, pages 55-56, London, GB; D.A. EVANS et al.: "Cyanosilylation of aldehydes and ketones. A convenient route to cyanohydrin derivatives"

(73) Proprietor: MINNESOTA MINING AND MANUFACTURING COMPANY
3M Center, P.O. Box 33427
St. Paul, Minnesota 55133 (US)

(72) Inventor: Krepski, Larry R.
Minnesota Mining & Manufacturing Company
P.O.Box 33427, St. Paul, MN 55133 (US)
Inventor: Heilman, Steven M.
Minnesota Mining & Manufacturing Company
P.O.Box 33427, St. Paul, MN 55133 (US)
Inventor: Rasmussen, Jerald K.
Minnesota Mining & Manufacturing Company
P.O.Box 33427, St. Paul, MN 55133 (US)

(74) Representative: Baillie, Iain Cameron et al
c/o Ladas & Parry Isartorplatz 5
D-8000 München 2 (DE)

(56) References cited:
COMPTES RENDUS HEBDOMADAIRES DES SEANCES DE L'ACADEMIE DES SCIENCES, vol. 236, January-June 1953, pages 387-389, Paris, FR; I. ELPHIMOFF-FELKIN et al.: "Synthèse d'kappa-céto et kappa-amino-alcools à partir de cyanhydrines. I. Cyanhydrine de la cyclohexanone"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 170 517 B1

Courier Press, Leamington Spa, England.

(56) References cited:
**BULLETIN DE LA SOCIETE CHIMIQUE DE FRANCE, no. 140, 1955, pages 784-789, Paris, FR; I. ELPHIMOFF-FELKIN "Sur une nouvelle méthode générale de synthèse des kappa-cétols et kappa-amino-alcools à fonction alcool tertiaire"**

**CHEMICAL ABSTRACTS, vol. 95, no. 7, 17 Aug 1981, Columbus, OH (US); R.AMOUROUX et al.: "A new synthesis of beta-amino alcohols via O-silatedcyanohydrins", p. 662, no. 61556u**

## Description

### BACKGROUND OF THE INVENTION

1. Field of the Invention

This invention relates to a process for preparing 1,2-amino alcohols.

2. Description of the Background Art

1,2-amino alcohols (sometimes called beta-aminoalcohols) are compounds with an amino group and a hydroxyl group on adjacent carbon atoms. They are of considerable commercial importance, particularly in the pharmaceutical industry. Many 1,2-amino alcohols are important as drugs or as intermediates for the preparation of drugs (D. Lednicer and L. A. Mitscher, "The Organic Chemistry of Drug Synthesis", John Wiley and Sons, New York, 1977, pp. 62—84). Additionally, 1,2-amino alcohols are useful intermediates for the preparation of various heterocycles such as oxazolines (J. A. Frump, *Chem. Rev., 71,* 483 (1971)) or aziridines (I. Okado, K. Ichimura, R. Sudo, *Bull. Chem. Soc. (Japan), 43,* 1185 (1970)).

Of the several methods which have been developed for the preparation of 1,2-amino alcohols, few are general, versatile, provide high yields, or employ readily available starting materials.

A method for the synthesis of 1,2-amino alcohols which is similar to the process of the present invention has been reported in I. Elphimoff-Felkin, *Bull. Soc. Chem. Fr.,* 784 (1955). In this method, the tetrahydropyranyl ether of a cyanohydrin,

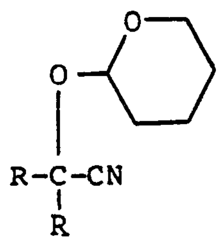

was reacted with a Grignard reagent, R'MgX, and then the intermediate product was reduced with lithium aluminum hydride ($LiAlH_4$). One shortcoming of this method is the necessity of first converting a ketone to its cyanohydrin, then converting this cyanohydrin to its tetrahydropyranyl ether. Both steps occur with varying degrees of efficiency, and yields are not uniformly high. A second shortcoming is that the reaction was not demonstrated to be general, i.e. applicable with essentially any ketone, since the only examples reported were with acetone, cyclopentanone, and cyclohexanone. The third shortcoming is that the only reducing agent which was demonstrated to be effective for reduction of the intermediate product was lithium aluminum hydride, $LiAlH_4$, and its use provided only poor to moderate yield of product. In addition, lithium aluminum hydride is a hazardous reagent.

A method for the synthesis of acyloins has been reported in L. R. Krepskietal, Tetrahedron Letters, Vol. 24, no. 38, 1983, p. 4075—4078. In this method Grignard reagents have been founded to react with O-trimethylsilylated cyanohydrins to afford, after acid hydrolysis of intermediates good yield of acyloins. When the reaction of 2 equivalents of an organolithium reagent with O-trimethylsilylated cyanhydrins has been reported as method of the preparation of β-aminoalcohols.

### SUMMARY OF THE INVENTION

The present invention involves a process for producing 1,2-amino alcohols. The process comprises the steps of:

(1) reacting a silylated cyanohydrin compound with a Grignard reagent;
(2) treating the reaction product of Step 1 with either a reducing agent or an organolithium compound,
(3) hydrolyzing the reaction product of Step 2; and
(4) isolating the resulting 1,2-amino alcohol.

The method of the present invention results in formation of 1,2-amino alcohols in high overall yield and, generally, with fewer steps than with previously known synthetic methods. In addition, the present method is more general, being applicable with essentially any aldehyde or ketone starting material. Furthermore, with the method of this invention, the reduction of the intermediate reaction product can be accomplished with a variety of different reducing agents and is not limited to the use of lithium aluminum hydride. The process of this invention can also be used to prepare various mixtures of the 1,2-amino alcohol diastereomers. The versatility of being able to use different reducing agents or reducing step conditions or both in the present invention results in the production of diastereomeric products with the two stereoisomers in different ratios, an important feature because the individual diastereomers of a 1,2-amino alcohol often have very different physical and biological properties.

DETAILED DESCRIPTION OF THE INVENTION

Silylated cyanohydrins that are preferred for use in the process of this invention can be represented by the formula:

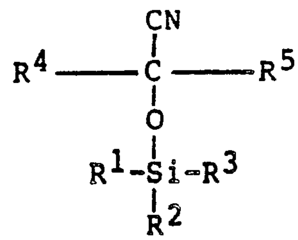

I

wherein

$R^1$, $R^2$, and $R^3$ can be the same or different and independently represent a member of the group consisting of hydrogen, alkyl groups, e.g., containing 1 to 6 carbon atoms, aralkyl groups, e.g. containing 7 to 12 carbon atoms, alkaryl groups, e.g. containing 7 to 12 carbon atoms, aryl groups, e.g., containing 6 to 14 carbon atoms, alkoxy groups, e.g., containing 1 to 6 carbon atoms, and

$R^4$ and $R^5$ independently represent a member of the group consisting of hydrogen, alkyl groups, e.g. containing 1 to 30 carbon atoms, aralkyl groups, e.g., containing 7 to 30 carbon atoms, alkaryl groups, e.g., containing 7 to 30 carbon atoms, aryl groups, e.g., containing 6 to 30 carbon atoms, or $R^4$ and $R^5$, along with the carbon atom to which they are bonded, together represent a cycloalkyl group, e.g., containing 3 to 30 carbon atoms, said alkyl, cycloalkyl, aralkyl, alkaryl, and aryl groups of $R^1$, $R^2$, $R^3$, $R^4$, and $R^5$ being optionally substituted with various groups which are inert to the reaction conditions of step (1), e.g., alkoxy, aryloxy, alkaryloxy, aralkoxy, silyloxy, and halo.

Silylated cyanohydrin compounds useful in this invention are well-known in the art and can be prepared by reacting an aldehyde or ketone with a silyl cyanide, optionally in the presence of a catalyst. The reaction between the silyl cyanide and the aldehyde or ketone can take place in the absence or presence of solvent. Examples of solvents useful for the reaction are polar aprotic solvents, such as acetonitrile, N,N-dimethylformamide, N,N-dimethylacetamide and N-methylpyrrolidone, or non-polar aprotic solvents such as benzene, toluene, chloroform, methylene chloride, hexane, pentane, and mixtures thereof. Solvents that are unsuitable for the reaction are those which would react with the silyl cyanide reactant or the silylated cyanohydrin product. These include water and alcoholic solvents. The reaction may be conducted in the presence of catalysts, such as zinc cyanide and zinc iodide, to hasten formation of the silylated cyanohydrin product.

Choice of the $R^1$, $R^2$, and $R^3$ groups is not particularly important since those groups are not retained in the final product. Preferred $R^1$, $R^2$, and $R^3$ groups are methyl, because the trimethylsilyl cyanide reagent is commercially available or can be formed *in situ* as described below.

Although the trimethylsilyl cyanide reagent used in this invention is commercially available, methods are known for generating the trimethylsilyl cyanide reagent *in situ*. J. K. Rasmussen and S. M. Heilmann (*Synthesis*, (1978), pp. 219—221) describe a method for synthesizing silylated cyanohydrins which involves reacting an aldehyde or ketone with chlorotrimethylsilane and potassium cyanide in a solvent such as acetonitrile or N,N-dimethylformamide. The reaction is accomplished by adding the carbonyl compound (0.1 mol) to a stirred suspension of potassium cyanide (0.3 mol) in solvent (20 ml), trimethylsilyl chloride (0.16 mol) and, optionally, zinc iodide (0.05 g). The mixture is refluxed gently and monitored by gas-liquid chromatography. On completion, the reaction mixture is filtered, the filter cake washed with dry solvent and filtered, and the combined filtrates concentrated *in vacuo*. Distillation at reduced pressure affords pure silylated cyanohydrins.

Representative examples of silylated cyanohydrins that are suitable for use in the process of this invention are the silylated cyanohydrins of cyclohexanecarboxaldehyde, butyraldehyde, benzaldehyde, *p*-anisaldehyde, *p*-tolualdehyde, *m*-dimethylaminobenzaldehyde, *o*-chlorobenzaldehyde, phenylacetaldehyde, pivaldehyde, pyridine-2-carboxaldehyde, *p*-nitrobenzaldehyde, cinnamaldehyde, crotonaldehyde, 7-methoxy-3,7-dimethyloctanal, phenylpropargylaldehyde, 9-anthraldehyde, 3-benzyloxy-4-methoxybenzaldehyde, 4-biphenylcarboxaldehyde, 2-fluorenecarboxaldehyde, p-fluorobenzaldehyde, 4-trimethylsilyloxybenzaldehyde, 2-naphthaldehyde, 1-pyrenecarboxaldehyde, ferrocenecarboxaldehyde, 2-furaldehyde, 5-methyl-2-thiophenecarboxaldehyde, l-perillaldehyde, 1,2,3,6-tetrahydrobenzaldehyde, acetylacetaldehyde dimethylacetal, 5-trimethylsilyloxy-2-pentanone, 5-chloro-2-pentanone, 4-dodecyloxybenzophenone, 9-heptadecanone, mesityl oxide, 3-methylthio-2-butanone, 10-nonadecanone, 2-adamantanone, dibenzosuberone, 4-chromanone, acetone, methyl ethyl ketone, cyclohexanone, camphor, acetophenone, benzophenone, deoxybenzoin, fluorenone, cyclododecanone, 3-cholestanone, and γ-chloro-*p*-fluorobutyrophenone.

Grignard reagents that are preferred for use in the process of this invention can be represented by the formula:

$$R^6MgX \qquad II$$

wherein

$R^6$ represents a member selected from the group consisting of alkyl groups, e.g., containing 1 to 30 carbon atoms, aralkyl groups, e.g., containing 7 to 30 carbon atoms, alkaryl groups, e.g., containing 7 to 30 carbon atoms, and aryl groups, e.g., containing 6 to 30 carbon atoms, said groups being optionally substituted with various groups which are inert to the reaction conditions of step (1), such as alkoxy, aryloxy, alkaryloxy, aralkoxy, silyloxy, and halo, and

X represents chloro, bromo or iodo.

Preparation of the Grignard reagent is well-known in the art and is discussed in detail in M. S. Kharasch and O. Reinmuth, *Grignard Reactions of Nonmetallic Substances*, Prentice-Hall, Englewood Cliffs, New Jersey (1954), Chapter 2. In general, an organohalogen compound is allowed to react with magnesium in an anhydrous solvent to yield the organomagnesium halide, i.e., the Grignard reagent. Useful solvents for preparing Grignard reagents include benzene, toluene, diethyl ether, tetrahydrofuran, diisopropyl ether, and methyl *t*-butyl ether, with the ether solvents being preferred. The process for forming the Grignard reagent is generally exothermic; consequently, the organohalogen compound is generally dissolved in the solvent and added portion-wise or dropwise to the magnesium metal immersed in the same solvent such that mild refluxing of the solvent occurs, thus moderating the exothermicity of the reaction. The mixture can be heated for about 1 to 2 hours to ensure complete reaction of all the added organohalogen compound. The reaction mixture should then be allowed to cool to room temperature (about 25°C) whereupon it can then be used directly in the process of the invention.

Representative examples of Grignard reagents that are suitable for use in the process of this invention are methylmagnesium chloride, ethylmagnesium iodide, ethylmagnesium bromide, *n*-propylmagnesium chloride, *n*-butylmagnesium chloride, *n*-hexylmagnesium bromide, tetramethylenedimagnesium dibromide, *n*-octylmagnesium chloride, phenylmagnesium bromide, *p*-chlorophenylmagnesium bromide, phenylmagnesium chloride, 9-phenanthrylmagnesium bromide, cinnamylmagnesium chloride, adamantylmagnesium bromide, 3-cholestanylmagnesium chloride, 1-tetradecylmagnesium bromide, 3-methylbenzylmagnesium chloride, 2-methoxyphenylmagnesium bromide, 3-(2-dioxolanyl)phenylmagnesium bromide, crotylmagnesium bromide, 4-hexadecylphenylmagnesium bromide, 11,11-dimethoxyundecylmagnesium bromide, 5-trimethylsilyloxypentylmagnesium iodide, 4-trifluoromethylphenylmagnesium bromide, 9,10-diphenyl-2-anthrylmagnesium chloride, vinylmagnesium chloride, and 2-thienylmagnesium iodide.

A preferred class of 1,2-amino alcohols produced by the process of this invention can be represented by the formula:

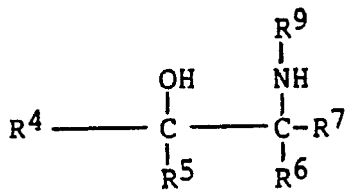

III

wherein

$R^4$, $R^5$, and $R^6$ are as defined above,

$R^7$ represents a member of the group consisting of hydrogen and $R^8$ wherein $R^8$ represents a member of the group consisting of alkyl groups, e.g., containing 1 to 30 carbon atoms, aralkyl groups, e.g., containing 7 to 30 carbon atoms, alkaryl groups, e.g., containing 7 to 30 carbon atoms, and aryl groups, e.g., containing 6 to 30 carbon atoms, said groups being optionally substituted with various groups which are inert to the reaction conditions of step (2), such as alkoxy aryloxy, alkaryloxy, aralkoxy, silyloxy, and halo, and

$R^9$ represents a member of the group consisting of hydrogen and $R^{10}CH_2$ wherein $R^{10}$ represents a member of the group consisting of alkyl groups, e.g., containing 1 to 20 carbon atoms, aralkyl groups, e.g., containing 1 to 12 carbon atoms, alkaryl groups, e.g., containing 1 to 12 carbon atoms, and aryl groups, e.g., containing 6 to 14 carbon atoms, said groups being optionally substituted with various groups which are inert to the reaction conditions of step (2), such as alkoxy, aryloxy, alkaryloxy, aralkoxy, silyloxy, and halo.

The reaction of the silylated cyanohydrin compound with the Grignard reagent can be accomplished by adding a solution of the silylated cyanohydrin compound to the Grignard reagent. It is preferred that the solution of silylated cyanohydrin compound be added dropwise to the Grignard reagent over a period of about one-half to one hour. The reaction, which is depicted by Equation (1) and is believed to result in the magnesium salt of the alpha-silyloxy imine is mildly exothermic — less so than the reaction wherein the Grignard reagent is prepared. Consequently, external cooling of the reaction mixture can usually be avoided.

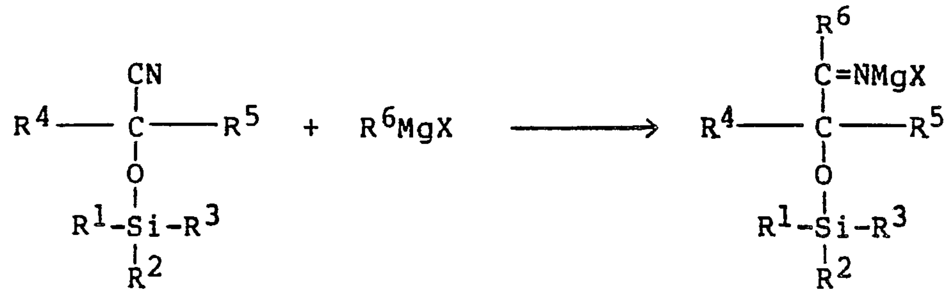

(1)

wherein

$R^1$, $R^2$, $R^3$, $R^4$, $R^5$, and $R^6$ are as defined above.

Solvents that are appropriate to dissolve the silylated cyanohydrin reactant are the solvents which are suitable for use in the preparation of the Grignard reagent. After the addition of the solution of the silylated cyanohydrin compound has been completed, the reaction mixture can be refluxed to ensure that all the silylated cyanohydrin has reacted. Preferably, the reaction mixture is refluxed for an additional 1 to 2 hours or stirred at room temperature for longer periods of times, e.g. 12 to 16 hours.

Though stoichiometric amounts can be used, generally, an excess of up to 200 mole percent of the Grignard reagent, with a preferred excess of up to 100 mole percent, and a more preferred excess of 5 to 25 mole percent, can be employed. Use of substantial excesses of Grignard reagent, i.e. greater than 25 mole percent, has been discovered to result in diminished yields and much more complicated reaction product mixtures.

Various reducing agents are suitable for the second step of the process of this invention. The following classes of reducing agents are preferred:

a) hydride reducing agents such as metal aluminum hydrides, e.g. lithium aluminum hydride and lithium trialkoxyaluminum hydride, metal borohydrides, e.g. lithium, sodium, potassium, calcium and zinc borohydrides, sodium cyanoborohydride, borane, borane complexes with amines, e.g. tert-butylamine, diethylaniline, dimethylamine, N-ethylmorpholine, 2,6-lutidine, morpholine, N-phenylmorpholine, poly(2-vinyl pyridine), pyridine, triethylamine, and trimethylamine, borane complexes with sulfides, e.g. methyl sulfide and 1,4-oxathiane, borane complexes with phosphines, e.g. tri-n-butylphosphine, borane complexes with phosphites, e.g. triphenylphosphite, a borane complex with tetrahydrofuran, other boron reducing agents, e.g. 9-borabicyclo[3.3.1]nonane, disiamylborane, thexylborane, -isopinocampheyl-9-borabicyclo[3.3.1]nonyl hydride, sodium bis(2-methoxyethoxy)aluminum hydride, sodium diethyldihydroaluminate, and diisobutylaluminum hydride;

b) hydrogen in the presence of a metal catalyst such as finely dispersed palladium, platinum, or Raney nickel;

c) dissolving metals such as lithium, magnesium, potassium, or sodium dissolved in an alcohol such as methanol or ethanol; and

d) sodium dithionite.

A preferred reducing agent is sodium borohydride and the reduction step can be conveniently carried out by adding a solution of sodium borohydride in an alcohol such as methanol, ethanol, or propanol to the solution of the reaction product of Equation (1) at room temperature. However, the reduction may also be carried out at a lower temperature. It has been found that the temperature of the reduction influences the ratio of the diastereomers of the 1,2-amino alcohols. The diastereomeric ratio can be influenced by changing the reducing agent, for example by utilizing magnesium metal in methanol or zinc borohydride or lithium aluminum hydride instead of sodium borohydride as the reducing agent. It is often desirable to influence the diastereomeric ratio because, in the case of pharmaceuticals, one diastereomeric 1,2-amino alcohol may have very different physical and biological properties than the other diastereomer.

Additionally, further elaborated 1,2-amino alcohols can be prepared by adding an organolithium reagent, $R^8Li$, to the reaction product of Equation (1), wherein $R^8$ is as previously defined. Representative examples of organolithium reagents that are suitable for use in the preparation of the further elaborated 1,2-aminoalcohols include methyllithium, n-butyllithium, phenyllithium, vinyllithium, hexadecyllithium, 4,4-dimethyl-2-lithiomethyl-2-oxazoline, and 4-methoxyphenyllithium. In this instance, the process may be illustrated in Scheme 1:

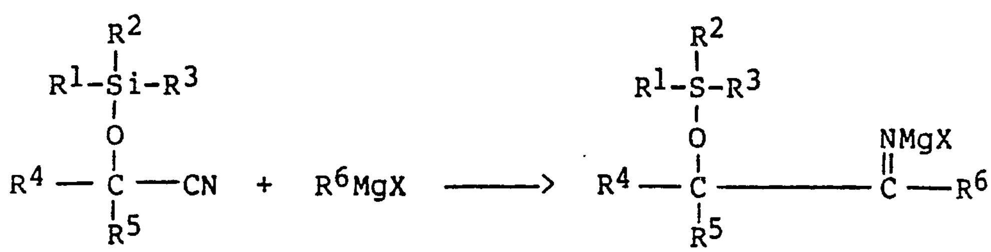

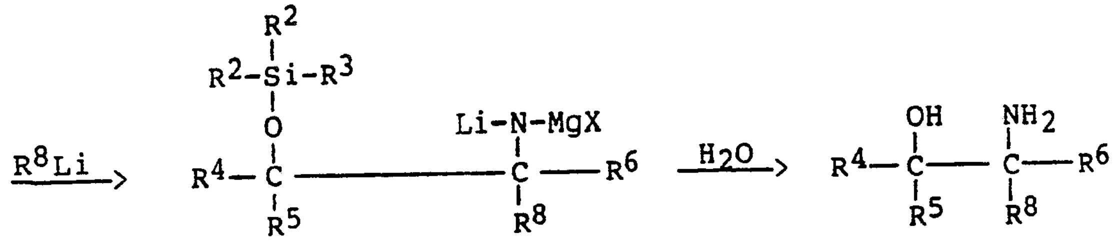

Scheme 1

An amino alcohol with a substituent on nitrogen other than hydrogen where the substituent on nitrogen corresponds to a reduced carboxylic acid can also be prepared. This can be conveniently accomplished by adding a mixture of sodium borohydride and a carboxylic acid rather than sodium borohydride and an alcohol to the solution of the reaction intermediate from Equation (1). For example, if acetic acid is used, the N-ethyl amino alcohol is produced. It is well-known that many pharmaceutically important 1,2-amino alcohols have substituents other than hydrogen on nitrogen. In general, if a carboxylic acid having the formula $R^{10}CO_2H$ is utilized in this step, $R^9$ of formula III is $R^{10}CH_2$ wherein $R^{10}$ is as previously defined. Representative carboxylic acids of formula $R^{10}COOH$ which may be utilized include acetic acid, propionic acid, formic acid, butyric acid, pivalic acid, benzoic acid, trifluoroacetic acid, isobutyric acid, palmitic acid, monochloroacetic acid, stearic acid. If a carboxylic acid is not utilized in this step, then $R^9$ of formula III is hydrogen.

After either the reduction of intermediate from Equation (1) or the addition of an organolithium reagent to the intermediate from Scheme 1, hydrolysis to form the 1,2-amino alcohol can be effected by first adding an aqueous solution of an acid having a pKa of less than about 5 to the reaction mixture. Acids that can be used in this step of the process are hydrochloric acid, sulfuric acid, nitric acid, and phosphoric acid, with hydrochloric acid being preferred. The mixture is then stirred, preferably at room temperature for a period of about one hour.

Isolation and recovery of the 1,2-amino alcohol product can be accomplished in several ways, the following being expedient. The aqueous acidic layer is separated from the organic layer of Step (3), and the organic layer is extracted with several additional portions of an aqueous acid solution. By the extraction procedure, the basic 1,2-amino alcohol product is separated from any non-basic side products from the reaction. The aqueous acid solutions are combined with the original aqueous acidic layer, and then to this combination an aqueous solution of sodium hydroxide, potassium hydroxide, or ammonium hydroxide is added to raise the pH of the original aqueous layer to about 8 to 10. In some cases this will cause the 1,2-amino alcohol to precipitate immediately, and it can then be isolated by simple filtration. In other cases, the 1,2-amino alcohol product does not precipitate immediately, but it can be isolated by means of extraction with a suitable organic solvent. As one example, the aqueous alkaline layer can be extracted with several portions of chloroform and the chloroform extracts combined. The chloroform can be removed from the combined extracts by evaporation, leaving the 1,2-amino alcohol product, usually in a very pure form. Further purification can be effected by distillation or recrystallization of the 1,2-amino alcohol product. In addition, the 1,2-amino alcohol can be converted to a salt by treatment with an acid, for example, hydrobromic, hydrochloric, maleic, or tartaric acid.

The invention can be further illustrated by the following non-limiting examples.

## Example 1

STEP 1

To a stirred solution of phenyl magnesium bromide was added dropwise a solution of 5.15 g (25 mmol) of the O-trimethylsilylated cyanohydrin of benzaldehyde dissolved in 75 mL of anhydrous diethyl ether. When the addition was complete, the reaction mixture was stirred overnight at room temperature.

STEP 2

A solution of 0.95 g (25 mmol) of sodium borohydride in 25 mL of methanol containing a few drops of a 10% solution of sodium hydroxide in water was added dropwise. The mixture was stirred for 3 hours at room temperature.

STEP 3

Then 100 mL of a 10% solution of hydrochloric acid in water was added and the mixture stirred for 1 hour. Diethyl ether (100 mL) was added.

STEP 4

The layers were separated, and the organic layer was extracted three times with 75 mL portions of a 10% aqueous hydrochloric acid solution. All the aqueous washings were combined and the pH adjusted to a value between 8 and 10 by the addition of about 300 mL of concentrated ammonium hydroxide solution. The white precipitate which formed was collected by filtration and dried. The aqueous filtrate was extracted

with three 100 mL portions of chloroform. The combined chloroform extracts were washed with 75 mL of brine, dried over potassium carbonate, filtered, and evaporated to leave a white solid which was combined with the solid from the filtration to give 5.2 g (98%) of 2-amino-1,2-diphenyl ethanol as a 16:1 mixture of erythro and threo diastereomers as determined by $^1H$—NMR.

The O-trimethylsilylcyanohydrin of benzaldehyde used in STEP 1 was prepared by the following method:

In a one liter, three-necked, round bottomed flask equipped with a mechanical stirrer, a reflux condenser fitted with a nitrogen-inlet tube, and a rubber septum were placed 97.5 grams (1.5 moles) of finely ground potassium cyanide (passed through a #30 sieve and dried at 115°C at 0.5 torr for 24 hours), 100 mL of acetonitrile (dried over 4A molecular sieves), 81.4 grams (0.75 mole, 92.2 mL) of chlorotrimethylsilane, 53 grams (0.5 mole) of benzaldehyde and 0.5 gram (0.0004 mole) of zinc cyanide. The reaction was blanketed with dry nitrogen, stirring was begun, and the temperature raised to maintain gentle refluxing. After 21 hours, the reaction was complete, as evidenced by disappearance of benzaldehyde in the glpc analysis of a small sample taken from the reaction mixture. The reaction mixture was cooled and filtered with suction. The filter cake was washed twice with 50 mL of acetonitrile, and the combined filtrates were concentrated on a rotary evaporator. The residue was distilled at 93—95°C at 1.75 torr and weighed 84.0 grams (95% yield). The structure of the product was corroborated by spectral analyses.

Phenyl magnesium bromide used in STEP 1 was prepared by the following method:

Into a dry 500 ml, three-necked, round-bottomed flask equipped with a magnetic stirrer, argon inlet, addition funnel and condenser were placed 1.1 g (45 mg atom) of magnesium turnings and 10 mL of anhydrous diethyl ether. A solution of 5.5 g (35 mmol) of bromobenzene in 75 mL of anhydrous diethyl ether was added dropwise at such a rate that gentle refluxing of the solvent occurred. After the addition was complete, the solution was stirred for two hours.

Examples 2—6

The 1,2-amino alcohols listed in Table 1 and within the scope of formula III were obtained by the procedure described in Example 1.

TABLE 1

| Example | $R^4$ | $R^5$ | $R^6$ | $R^7$ | $R^9$ | Yield, % |
|---|---|---|---|---|---|---|
| 2 | $CH_3$ | $CH_3$ | $C_6H_5$ | H | H | 93 |
| 3 | $CH_3$ | $CH_3$ | $C_6H_{13}$ | H | H | 80 |
| 4 | $CH_3$ | $CH_3$ | c-$C_5H_9$ | H | H | 63 |
| 5 | $-(CH_2)_5-$* | | $CH_3$ | H | H | 88 |
| 6 | $-(CH_2)_5-$* | | $C_6H_5$ | H | H | 74 |

* $-(CH_2)_5-$ along with the carbon atom to which it is bonded represents the cyclohexyl radical.

Examples 7—13

These examples indicate the influence of reducing agent and reduction temperature on the diastereomeric ratio of the 1,2-amino alcohols produced.

The 1,2-amino alcohols listed in Table 2 and within the scope of formula III were obtained by the procedure described in Example 1 except that the conditions of reduction were varied as indicated in Table 2.

TABLE 2

| Example | $R^4$ | $R^5$ | $R^6$ | $R^7$ | $R^9$ | Reducing Agent | Temperature °C | Yield % | Diastereomeric Ratio,* Erythro:Threo |
|---|---|---|---|---|---|---|---|---|---|
| 7 | $C_6H_5$ | H | $C_6H_5$ | H | H | $LiAlH_4$ | 23 | 45 | 11.0 |
| 8 | $C_6H_5$ | H | $C_6H_5$ | H | H | $Mg/CH_3OH$ | 50 | 56 | 1.1 |
| 9 | 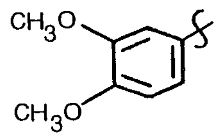 | H | $CH_3$ | H | H | $NaBH_4$ | 23 | 85 | 4.3 |
| 10 | 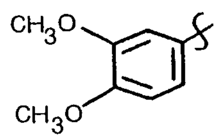 | H | $CH_3$ | H | H | $NaBH_4$ | 0 | 95 | 4.9 |
| 11 | 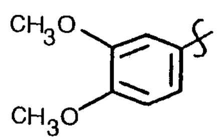 | H | $CH_3$ | H | H | $NaBH_4$ | −78 | 90 | 24 |
| 12 | 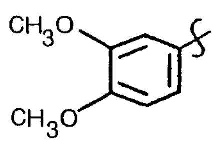 | H | $CH_3$ | H | H | $Zn(BH_4)_2$ | 23 | 96 | 7.3 |
| 13 | 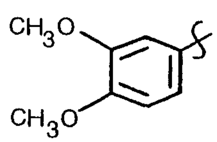 | H | $CH_3$ | H | H | $Zn(BH_4)_2$ | −78 | 74 | 13.3 |

* Ratio determined by $^1H$—NMR.

Example 14

Preparation of 1-(3,4-dimethoxyphenyl)-2-ethylamino-propan-1-ol

By the procedure described in Example 1, 2.4 g (9.0 mmol) of the O-trimethylsilylated cyanohydrin of 3,4-dimethoxybenzaldehyde were reacted with 15 mmol of methylmagnesium iodide. To prepare the reducing agent, 2.5 g (68 mmol) of sodium borohydride was added to 25 mL of acetic acid in a separate reaction vessel, while the temperature of the solution was maintained below 20°C. This solution was then added dropwise to the reaction intermediate from the silylated cyanohydrin and Grignard reagent, and the mixture stirred for 5 hours. The solvent was then evaporated, 100 mL of diethyl ether and 25 mL of a 10% aqueous hydrochloric acid solution added to the residue, and the extractive work-up outlined in Example 1 was followed to yield 2.1 g of a gold semi-solid which was a 4:1 mixture of erythro and threo diastereomers of the desired N-ethylated amino alcohol, as determined by $^1H$—NMR.

Example 15

Preparation of 3-amino-2-methyl-3-phenyl-nonan-2-ol

By the procedure described in Example 1, 3.9 g (25 mmol) of the O-trimethylsilylated cyanohydrin of acetone were reacted with 27.5 mmol of n-hexylmagnesium bromide. To the reaction mixture was added 11.5 mL (27.5 mmol) of a solution of phenyllithium (2.4 molar in hexane-diethyl ether), and the mixture was stirred for 18 hours. Then 30 mL of a 10% aqueous hydrochloric acid solution were added and the extractive work-up of Example 1 was followed to yield 1.5 g of a white solid, mp. 64.5—65.5°C.

Various modifications and alterations of this invention will become apparent to those skilled in the art without departing from the scope and spirit of this invention, and it should be understood that this invention is not to be unduly limited to the illustrative embodiments set forth herein.

**Claims**

1. Process for the preparation of 1,2-amino alcohol comprising the steps of

(a) reacting a silylated cyanohydrin with a Grignard reagent,

(b) treating the reaction product of step (a) with either a reducing agent or an organolithium compound,

(c) hydrolyzing the reaction product of step (b), and

(d) isolating the 1,2-amino alcohol.

2. The process of claim 1 wherein the silylated cyanohydrin is represented by the formula

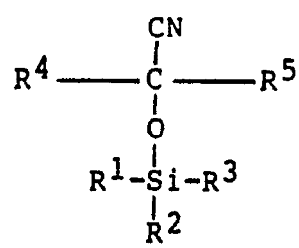

wherein

$R^1$, $R^2$, and $R^3$ can be the same or different and independently represent a member of the group consisting of hydrogen, alkyl groups, aralkyl groups, alkaryl groups, aryl groups, and alkoxy groups, and

$R^4$ and $R^5$ independently represent a member of the group consisting of hydrogen, alkyl groups, aralkyl groups, alkaryl groups, and aryl groups, or $R^4$ and $R^5$, along with the carbon atom to which they are bonded, together represent a cycloalkyl group, said alkyl, cycloalkyl, aralkyl, alkaryl and aryl groups of $R^4$ and $R^5$ being optionally substituted with various groups which are inert to the reaction conditions of step (a).

3. The process of claim 1 wherein the Grignard reagent is represented by the formula $R^6MgX$ wherein

$R^6$ represents a member of the group consisting of alkyl groups, aralkyl groups, alkaryl groups, and aryl groups, said groups being optionally substituted with various groups which are inert to the reaction conditions of step (a), and

X represents chloro, bromo or iodo.

4. The process of claim 1 wherein the 1,2-amino alcohol is represented by the formula:

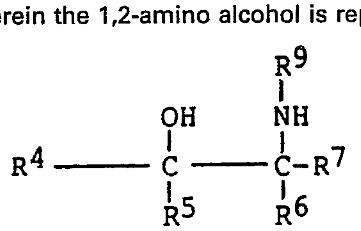

wherein

$R^4$ and $R^5$ independently represent a member of the group consisting of hydrogen, alkyl groups, aralkyl

groups, alkaryl groups, and aryl groups, or $R^4$ and $R^5$, along with the carbon atom to which they are bonded, together represent a cycloalkyl group, said alkyl, aralkyl, and aryl groups of $R^4$ and $R^5$ being optionally substituted with various groups which are inert to the reaction conditions of step (a),

$R^6$ represents a member of the group consisting of alkyl groups, aralkyl groups, alkaryl groups, and aryl groups, said groups being optionally substituted with various groups which are inert to the reaction conditions of step (a),

$R^7$ represents a member of the group consisting of hydrogen and $R^8$ wherein $R^8$ represents a member of the group consisting of alkyl groups, aralkyl groups, alkaryl groups, and aryl groups, said groups being optionally substituted with various groups which are inert to the reaction conditions of step (b), and $R^9$ represents a member of the group consisting of hydrogen and $R^{10}CH_2$ wherein $R^{10}$ represents a member of the group consisting of alkyl groups, aralkyl groups, alkaryl groups, and aryl groups, said groups being optionally substituted with various groups which are inert to the reaction conditions of step (b).

5. A process according to any one of claims 1 to 4 wherein the reducing agent is selected from the group consisting of hydrides, hydrogen in the presence of metal catalysts, metals dissolved in alcohol, and sodium dithionite.

6. A process according to claim 5 wherein the reducing agent is sodium borohydride.

7. A process according to any one of claims 1 to 6 wherein the reducing step is conducted at a temperature below 25°C at 1 atm pressure.

8. A process according to any one of claims 1 to 7 wherein the hydrolysis step is conducted with an acid having a pKa of 5 or lower.

9. A process according to claim 8 wherein said acid is a mineral acid.

10. A process according to any one of claims 2 to 9 wherein $R^4$ is an alkyl group or an aryl group each substituted or unsubstituted.

11. A process according to any one of claims 2 to 10 wherein $R^5$ is an alkyl group or an aryl group each substituted or unsubstituted.

12. A process according to any one of claims 2 to 9 wherein $R^4$ and $R^5$ together are a cycloalkyl group.

13. A process according to any one of claims 2 to 12 wherein $R^6$ is an alkyl or an aryl group each substituted or unsubstituted.

**Patentansprüche**

1. Verfahren zum Erzeugen von 1,2-Aminoalkohol mit folgenden Schritten:

(a) ein silyliertes Cyanhydrin wird mit einem Grignard-Reagens umgesetzt,

(b) das Reaktionsprodukt des Schrittes (a) wird mit einem Reduktionsmittel oder einer Organolithiumverbindung behandelt,

(c) das Reaktionsprodukt des Schrittes (b) wird hydrolysiert, und

(d) der 1,2-Aminoalkohol wird abgetrennt.

2. Verfahren nach Anspruch 1, dadurch gekennzeichnet, daß das silylierte Cyanhydrin die Formel

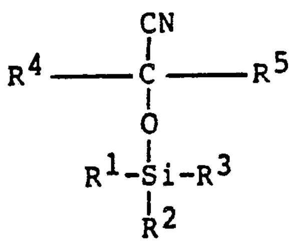

hat in der

$R^1$, $R^2$ und $R^3$ gleich oder verschieden sein können und unabhängig voneinander ein Glied der Gruppe darstellen, die aus Wasserstoff, den Alkylgruppen, den Aralkylgruppen, den Alkarylgruppen, den Arylgruppen und den Alkoxygruppen besteht, und

$R^4$ und $R^5$ unabhängig voneinander ein Glied der Gruppe darstellen, die aus Wasserstoff, den Alkylgruppen, den Aralkylgruppen, den Alkarylgruppen und den Arylgruppen besteht oder $R^4$ und $R^5$ zusammen und zusammen mit dem Kohlenstoffatom, mit dem sie verbunden sind, eine Cycloalkylgruppe darstellen, wobei die Alkyl-Cycloalkyl- Aralkyl- Alkaryl- und Arylgruppen von $R^4$ und $R^5$ gegebenenfalls mit verschiedenen Gruppen substituiert wird, die gegenüber den Reaktionsbedingungen des Schrittes (a) inert sind.

3. Verfahren nach Anspruch 1, dadurch gekennzeichnet, daß das Grignard-Reagens durch die Formel $R^6MgX$ dargestellt wird, in der

$R^6$ ein Glied der Gruppe darstellt, die aus den Alkylgruppen, den Aralkylgruppen, den Alkarylgruppen und den Arylgruppen besteht, wobei diese Gruppen gegebenenfalls mit verschiedenen Gruppen substituiert sind, die gegenüber den Reaktionsbedingungen des Schrittes (a) inert sind, und

X Chlor, Brom oder Jod darstellt.

4. Verfahren nach Anspruch 1, dadurch gekennzeichnet, daß der 1,2-Aminoalkohol durch die Formel

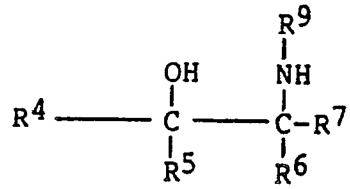

dargestellt wird, in der

$R^4$ und $R^5$ unabhängig voneinander ein Glied der Gruppe darstellen, die aus Wasserstoff, den Alkylgruppen, den Aralkylgruppen, den Alkarylgruppen und den Arylgruppen besteht oder $R^4$ und $R^5$ zusammen und zusammen mit dem Kohlenstoffatom, mit dem sie verbunden sind, eine Cycloalkylgruppe darstellen, wobei die Alkyl- Cycloalkyl- Aralkyl- Alkaryl- und Arylgruppen von $R^4$ und $R^5$ gegebenenfalls mit verschiedenen Gruppen substituiert sind, die gegenüber den Reaktionsbedingungen des Schrittes (a) inert sind,

$R^6$ ein Glied der Gruppe darstellt, die aus den Alkylgruppen, den Aralkylgruppen, den Alkarylgruppen und den Arylgruppen besteht, wobei diese Gruppen gegebenenfalls mit verschiedenen Gruppen substituiert sind, die gegenüber den Reaktionsbedingungen des Schrittes (a) inert sind,

$R^7$ ein Glied der Gruppe darstellt, die aus Wasserstoff und $R^8$ besteht, wobei $R^8$ ein Glied der Gruppe darstellt, die aus den Alkylgruppen, den Aralkylgruppen, den Alkarylgruppen und den Arylgruppen besteht, wobei diese Gruppen gegebenenfalls mit verschiedenen Gruppen substituiert sind, die gegenüber den Reaktionsbedingungen des Schrittes (b) inert sind, und $R^9$ ein Glied der Gruppe darstellt, die aus Wasserstoff und $R^{10}CH_2$ besteht, wobei $R^{10}$ ein Glied der Gruppe darstellt, die aus den Alkylgruppen, den Aralkylgruppen, den Alkarylgruppen und den Arylgruppen besteht, wobei diese Gruppen gegebenenfalls mit verschiedenen Gruppen substituiert sind, die gegenüber den Reaktionsbedingungen des Schrittes (b) inert sind.

5. Verfahren nach einem der Ansprüche 1 bis 4, dadurch gekennzeichnet, daß das Reduktionsmittel aus der Gruppe ausgewählt ist, die aus den Hydriden, Wasserstoff in Gegenwart von Metallkatalysatoren, in Alkohol gelösten Metallen und Natriumdithionit besteht.

6. Verfahren nach Anspruch 5, dadurch gekennzeichnet, daß das Reduktionsmittel Natriumborohydrid ist.

7. Verfahren nach einem der Ansprüche 1 bis 6, dadurch gekennzeichnet, daß der Reduktionsschritt bei einer Temperatur unter 25°C unter einem Druck von 1 atm durchgeführt wird.

8. Verfahren nach einem der Ansprüche 1 bis 7, dadurch gekennzeichnet, daß der Hydrolyseschritt mit einer Säure mit einem pKa-Wert von 5 oder darunter durchgeführt wird.

9. Verfahren nach Anspruch 8, dadurch gekennzeichnet, daß die Säure eine Mineralsäure ist.

10. Verfahren nach einem der Ansprüche 2 bis 9, dadurch gekennzeichnet, daß $R^4$ eine substituierte oder nicht-substituierte Alkylgruppe oder Arylgruppe ist.

11. Verfahren nach einem der Ansprüche 2 bis 10, dadurch gekennzeichnet, daß $R^5$ eine substituierte oder nicht-substituierte Alkylgruppe oder Arylgruppe ist.

12. Verfahren nach einem der Ansprüche 2 bis 9, dadurch gekennzeichnet, daß $R^4$ und $R^5$ zusammen eine Cycloalkylgruppe bilden.

13. Verfahren nach einem der Ansprüche 2 bis 12, dadurch gekennzeichnet, daß $R^6$ eine substituierte oder nicht-substituierte Alkylgruppe oder Arylgruppe ist.

**Revendications**

1. Procédé pour la préparation d'un 1,2-aminoalcool, comprenant les étapes consistant:
(a) à faire réagir une cyanohydrine silylée avec un réactif de Grignard,
(b) à traiter le produit de réaction de l'étape (a) avec un réducteur ou un composé organique du lithium,
(c) à hydrolyser le produit de réaction de l'étape (b), et
(d) à isoler le 1,2-aminoalcool.

2. Procédé selon la revendication 1, dans lequel la cyanohydrine silylée est représentée par la formule suivante:

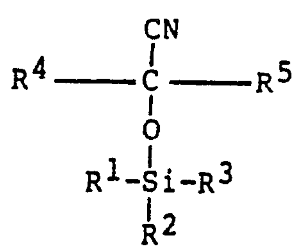

dans laquelle

$R^1$, $R^2$ et $R^3$ peuvent être identiques ou différents et, indépendamment les uns des autres, représentent chacun un élément de l'ensemble comprenant l'hydrogène, les groupes alkyle, les groupes aralkyle, les groupes alcaryle, les groupes aryle et les groupes alcoxy, et

$R^4$ et $R^5$, indépendamment l'un de l'autre, représentent chacun un élément de l'ensemble comprenant l'hydrogène, les groupes alkyle, les groupes aralkyle, les groupes alcaryle et les groupes aryle, ou encore $R^4$ et $R^5$, avec l'atome de carbone auquel ils sont liés, représentent ensemble un groupe cycloalkyle, lesdits groupes alkyle, cycloalkyle, aralkyle, alcaryle et aryle représentés par $R^4$ et $R^5$ étant facultativement substitués par différents groupes qui sont inertes vis-à-vis des conditions de réaction de l'étape (a).

3. Procédé selon la revendication 1, dans lequel le réactif de Grignard est représenté par la formule $R^6MgX$, dans laquelle:

$R^6$ représente un élément de l'ensemble comprenant les groupes alkyle, les groupes aralkyle, les groupes alcaryle et les groupes aryle, lesdits groupes étant facultativement substitués par différents groupes qui sont inertes vis-à-vis des conditions de réaction de l'étape (a), et

X représente un radical chloro, bromo ou iodo.

4. Procédé selon la revendication 1, dans lequel ledit 1,2-aminoalcool est représenté par la formule suivante:

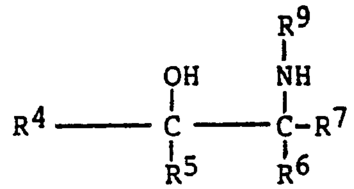

dans laquelle

$R^4$ et $R^5$, indépendamment l'un de l'autre, représentent chacun un élément de l'ensemble comprenant l'hydrogène, les groupes alkyle, les groupes aralkyle, les groupes alcaryle et les groupes aryle, ou encore $R^4$ et $R^5$, avec l'atome de carbone auquel ils sont liés, représentent ensemble un groupe cycloalkyle, lesdits groupes alkyle, aralkyle et aryle représentés par $R^4$ et $R^5$ étant facultativement substitués par différents groupes qui sont inertes vis-à-vis des conditions de réaction de l'étape (a),

$R^6$ représente un élément de l'ensemble comprenant les groupes alkyle, les groupes aralkyle, les groupes alcaryle et les groupes aryle, lesdits groupes étant facultativement substitués par différents groupes qui sont inertes vis-à-vis des conditions de réaction de l'étape (a),

$R^7$ représente un élément de l'ensemble comprenant l'hydrogène et $R^8$, où $R^8$ représente un élément de l'ensemble comprenant les groupes alkyle, les groupes aralkyle, les groupes alcaryle et les groupes aryle, lesdits groupes étant facultativement substitués par différents groupes qui sont inertes vis-à-vis des conditions de réaction de l'étape (b), et $R^9$ représente un élément de l'ensemble comprenant l'hydrogène et $R^{10}CH_2$, où $R^{10}$ représente un élément de l'ensemble comprenant les groupes alkyle, les groupes aralkyle, les groupes alcaryle et les groupes aryle, lesdits groupes étant facultativement substitués par différents groupes qui sont inertes vis-à-vis des conditions de réaction de l'étape (b).

5. Procédé selon l'une quelconque des revendications 1 à 4, dans lequel le réducteur est choisi parmi l'ensemble comprenant les hydrures, l'hydrogène en présence de catalyseurs métalliques, les métaux dissous dans de l'alcool et le dithionite de sodium.

6. Procédé selon la revendication 5, dans lequel le réducteur est le borohydrure de sodium.

7. Procédé selon l'une quelconque des revendications 1 à 6, dans lequel l'étape de réduction est mise en oeuvre à une température inférieure à 25°C sous une pression de 1 atmosphère.

8. Procédé selon l'une quelconque des revendications 1 à 7, dans lequel l'étape d'hydrolyse est mise en oeuvre avec un acide dont le $pK_a$ est inférieur ou égal à 5.

9. Procédé selon la revendication 8, dans lequel ledit acide est un acide minéral.

10. Procédé selon l'une quelconque des revendications 2 à 9, dans lequel $R^4$ est un groupe alkyle ou un groupe aryle, chacun d'eux étant substitué ou non-substitué.

11. Procédé selon l'une quelconque des revendications 2 à 10, dans lequel $R^5$ est un groupe alkyle ou un groupe aryle, chacun d'eux étant substitué ou non-substitué.

12. Procédé selon l'une quelconque des revendications 2 à 9, dans lequel $R^4$ et $R^5$ forment ensemble un groupe cycloalkyle.

13. Procédé selon l'une quelconque des revendications 2 à 12, dans lequel $R^6$ est un groupe alkyle ou aryle, chacun étant substitué ou non-substitué.